# EUROPEAN PATENT SPECIFICATION

(11) **EP 3 778 340 B1**
(45) Date of publication and mention of the grant of the patent: **10.01.2024**
(21) Application number: 18914157.5
(22) Date of filing: 21.09.2018
(51) Int. Cl.: B61F 7/00, B60B 35/00, B60B 35/10, B60B 17/00

(54) **LOCKING MECHANISM FOR VARIABLE GAUGE WHEEL SETS**
VERRIEGELUNGSMECHANISMUS FÜR RADSÄTZE MIT VARIABLER SPURWEITE
MÉCANISME DE VERROUILLAGE POUR ESSIEUX MONTÉS À ÉCARTEMENT VARIABLE

(30) Priority: 13.04.2018 CN 201810333763
(43) Date of publication of application: 17.02.2021
(73) Proprietor: CRRC QINGDAO SIFANG CO., LTD., Chengyang District Qingdao Shandong 266111 (CN)
(72) Inventor: ZHANG, Zhenxian, Qingdao, Shandong 266111 (CN); WANG, Xu, Qingdao, Shandong 266111 (CN); QIAO, Qingfeng, Qingdao, Shandong 266111 (CN); PENG, Guoping, Qingdao, Shandong 266111 (CN); LI, Zhongwen, Qingdao, Shandong 266111 (CN)
(74) Representative: Dilg, Haeusler, Schindelmann Patentanwaltsgesellschaft mbH
(86) International application number: PCT/CN2018/106984
(87) International publication number: WO 2019/196346

(56) References cited:
- EP-A2- 2 287 061
- CN-A- 107 650 937
- CN-A- 107 650 937
- CN-A- 107 757 652
- CN-A- 107 757 652
- CN-A- 108 407 840
- CN-A- 108 515 979
- JP-A- 2016 164 035

## Description

### CROSS-REFERENCE TO RELATED APPLICATION

The present application claims priority to Chinese Application No. 2018103337636 filed on April 13, 2018, entitled "Locking Mechanism for Gauge-changing Wheelset" invention.

### FIELD OF TECHNOLOGY

The present invention relates to the technical field of rail vehicle gauge change, in particular to a locking mechanism for a gauge-changing wheelset.

### BACKGROUND

With the rapid development of global economic integration, cross-border passenger and freight transportation has grown fast in recent years. However, the difference in gauges of railways in various countries has severely impeded the cross-border railway transportation. In order to overcome the obstacles to the cross-border railway transportation due to difference in gauges of railways in various countries, a gauge-changing bogie is proposed, that is, when a train travels on railways of another country, it adapts to the gauges of railways thereof by changing the distance between the wheels on its own wheelset.

In the process of train gauge changing, relative movements occur between the wheels on the same wheelset and it is of great importance to provide locking mechanisms for enabling wheels to change among different gauges. However, in the existing gauge-changing train structures, the locking mechanisms are complicated in structure, cumbersome to operate, and poor in reliability, and often fail to lock and unlock properly, which has become a constraint factor hindering the development of gauge-changing trains. CN107650937A discloses a gauge-changing method, comprising the following steps that (i) a bogie is supported, so that wheels are unloaded; (ii) sliding pieces are unlocked, so that the wheels are separated; and (iii) the wheels are slid to change rails. CN107757652A discloses a non-powered wheelset axle -box device used in a high-speed multiple unit train capable of providing a change between standard gauge and wide gauge, which includes a locking mechanism arranged between a sliding mechanism and an axle-box assembly. The locking mechanism includes a locking rod, work arms, nodes, drive arms, linkages, springs, a lower stopper and an upper stopper. EP2287061A2 relates to a variable gauge bogie with rotating axles and fixed track gauge change installation. The bogie comprises: a bearing platform of a railway wagon; at least one rotating axle including in its outer areas bearing parts of the suspension springs of said platform internally including bearings on which two wheels are assembled by means of a coupling device which allows their lateral movement and has connected thereto locking guides by means of which said lateral movement is controlled so as to be located in the positions corresponding to the two track gauges; and a track gauge change device housed in said bearing parts based on the cooperation of said locking guides and a lock which is vertically movable when actuated by locking/unlocking guides provided in a fixed installation for performing the track gauge change.

### SUMMARY

### (I) Technical problems to be solved

An embodiment of the present invention aims to solve at least one of the technical problems in the prior art or related technologies.

One of the embodiments of the present invention provides a locking mechanism for a gauge-changing wheelset, which is simple in structure and convenient to operate, and can provide reliable locking and unlocking, so as to change train gauge conveniently and reliably.

### (II) Technical solutions

In order to solve the technical problems above, the present invention provides a locking mechanism for a gauge-changing wheelset, comprising an outer sleeve and locking pins; opposite sides outside the outer sleeve are provided with bosses axially extending along the outer sleeve, and a plurality of flutes are disposed at intervals along length directions of the bosses; the locking pins are inserted into the flutes, and can be switched among the plurality of flutes under the action of an external force to change a gauge.

According to the invention, each locking pin comprises a pin body one side of which is provided with an open groove penetrating along the radial direction of the pin body, and the open groove is provided with at least one lug extending axially along the pin body, an upper end of the lug is connected with a groove top of the open groove, a notch is reserved between a lower end of the lug and a groove bottom of the open groove, and the lug is inserted into the flutes.

In an embodiment of the present invention, two parallel lugs extending axially along the pin body are provided in the open groove.

In an embodiment of the present invention, the distance between two adjacent flutes is equal to half of the gauge to be changed; the width of the lug matches that of the flute, and the width of the notch is greater than or equal to the thickness of the boss.

In an embodiment of the present invention, a bottom surface of the pin body is respectively provided as upward-slopping guide slants on both sides of the central axis.

In an embodiment of the present invention, an upper end of the pin body is connected by a return spring.

In an embodiment of the present invention, the bosses and the outer sleeve are integrally formed, and the lug and the open groove are integrally formed.

In an embodiment of the present invention, outer sides of the boss, the flute and the locking pin are each provided with a wear-resistant coating, and the wear-resistant coating is coated with a lubricant.

In an embodiment of the present invention, the locking mechanism further comprises an inner sleeve and a bearing, and the inner sleeve, the bearing and the outer sleeve are tightly sleeved in sequence from inside to outside.

In an embodiment of the present invention, the bearing comprises an inner ring and an outer ring, the inner ring of the bearing is press-fitted with an outer surface of the inner sleeve, the outer ring of the bearing is in clearance fit with an inner surface of the outer sleeve, and check rings are provided at both ends of the outer sleeve.

In an embodiment of the present invention, one end of the inner sleeve extends beyond the outer sleeve to form a wheel connection end.

In an embodiment of the present invention, the bearing is a rolling bearing.

### (III) Beneficial effects

Compared with the prior art, the present invention has at least the following advantages:
the locking mechanism for gauge-changing wheelset provided by the present invention comprises an outer sleeve and locking pins, bosses provided on opposite sides outside the outer sleeve and axially extending along the outer sleeve are adopted, and a plurality of flutes are disposed at intervals along the length directions of the bosses; the locking pins are inserted into the flutes, and can be switched among the plurality of flutes under the action of an external force; when the gauge is changed, the locking pins move upward and are disengaged from the flutes under the action of an external force so as to unlock, and then the wheels of the gauge-changing wheelset are pushed outward or inward to move to the desired gauge, and the locking pins are moved downward into corresponding flutes so as to lock, and thereby provide the change in the gauge of a train; the locking mechanism is simple in structure, and can change train gauge conveniently and reliably, thereby provide continuous running of trains on rails of different gauges.

Further, by disposing two parallel lugs extending axially along the pin body in the open groove, the forces on individual lugs are reduced, and thus the reliability of locking and unlocking is enhanced.

### BRIEF DESCRIPTION OF THE DRAWINGS

Fig. 1 is a schematic diagram of the locking mechanism for gauge-changing wheelset in a locked state according to an embodiment of the present invention;
Fig. 2 is an axial sectional view of Fig. 1;
Fig. 3 is a schematic diagram of the locking mechanism for gauge-changing wheelset in an unlocked state according to an embodiment of the present invention;
Fig. 4 is an axial sectional view of Fig. 3;
Fig. 5 is a three-dimensional schematic diagram of the outer sleeve of the locking mechanism for gauge-changing wheelset according to an embodiment of the present invention;
Fig. 6 is a three-dimensional schematic diagram of the locking pin of the locking mechanism for gauge-changing wheelset according to an embodiment of the present invention; and
Fig. 7 is a three-dimensional schematic diagram of the locking mechanism for gauge-changing wheelset after being installed according to an embodiment of the present invention;

### Reference numerals:

| | | | |
|---|---|---|---|
| 1 | outer sleeve | 11 | boss |
| 12 | flute | 2 | locking pin |
| 21 | pin body | 22 | open groove |
| 23 | lug | 24 | notch |
| 25 | guide slant | 3 | bearing |
| 4 | inner sleeve | 41 | wheel connection end |
| 5 | return spring | 6 | wheel |
| 7 | axle-box body | | |

### DETAILED DESCRIPTION

Specific embodiments of the present invention will be described in further detail below in conjunction with the drawings and embodiments. The following examples are used to illustrate the present invention, rather than to limit the scope of the present invention.

With respect to the description of the present invention, it should be noted that the orientation or positional relationship indicated by the terms such as "center", "longitudinal", "lateral", "upper", "lower", "front", "back", "left", "right", "vertical", "horizontal", "top", "bottom", "inner", "outer" is based on the orientation or positional relationship shown in the drawings, the purpose of which is only to facilitate describing the present invention and simplify the description, rather than to indicate or imply that the device or element referred to must have a specific orientation, be constructed and operated in a specific orientation, and therefore cannot be construed as a limitation of the present invention.

In the description of the present invention, it should be noted that, unless otherwise clearly specified or defined, the terms "install", "connected with" and "connected to" should be understood in a broad sense, for example, it can be a fixed connection or a detachable connection, or an integral connection; it can be mechanically connected or electrically connected; it can be directly connected or indirectly connected through an intermediary and can be communication between interiors of two elements. For those of ordinary skill in the art, the specific meaning of the above terms in the present invention can be understood according to the specific situations.

In addition, in the description of the present invention, unless otherwise specified, "a plurality of', "multiple", and "multiple sets" mean two or more.

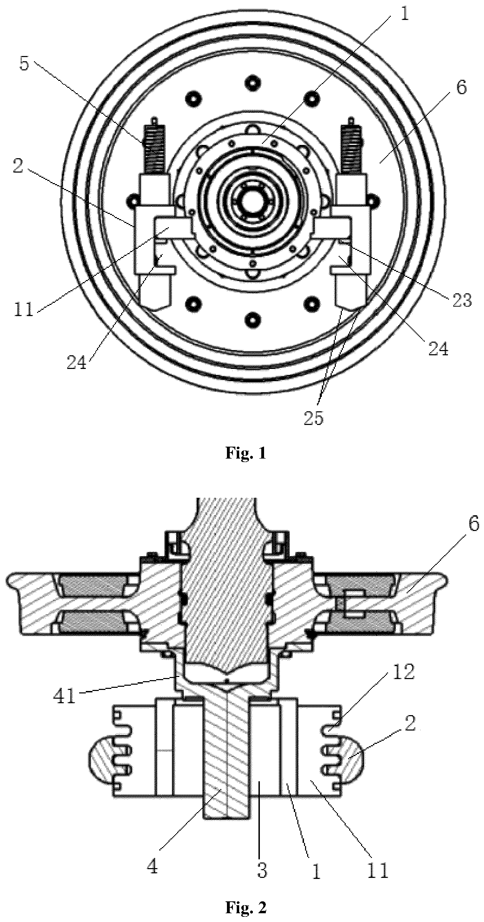

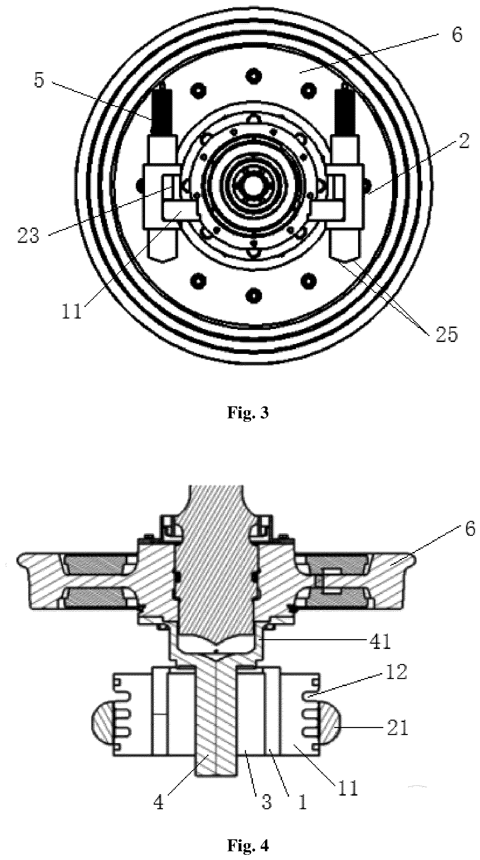

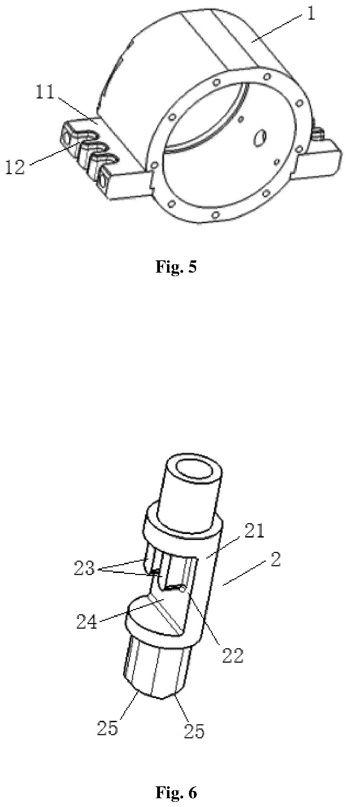

FIGS. 1-7 show a locking mechanism for gauge-changing wheelset provided by embodiments of the present invention, the locking mechanism specifically comprises an inner sleeve 4, a bearing 3, an outer sleeve 1, and locking pins 2; wherein the inner sleeve 4, the bearing 3, and the outer sleeve 1 are tightly sleeved from inside to outside to form a whole; during installation, one end of the inner sleeve 4 is fixedly connected to the wheel 6; in this embodiment, the bearing 3 is preferably a rolling bearing, so as to facilitate the transmission of rotation and play the role of lateral positioning; specifically, the bearing 3 includes an inner ring and an outer ring, and the inner ring of the bearing 3 is press-fitted and connected with an outer surface of the inner sleeve 4; in addition, in order to ensure the structural strength of the inner sleeve 4, the inner sleeve 4 can be designed to have one end as a support shaft and the other end as a cylindrical structure, where, the inner ring of the bearing 3 is sleeved on the support shaft, and the cylindrical end is sleeved on an axle and connected with a wheel 6; the outer ring of the bearing 3 in clearance fit with and connected to the inner surface of the outer sleeve 1 to facilitate the assembly and disassembly of the outer sleeve 1; in order to ensure that no relative slide between the outer sleeve 1 and the bearing 3, check rings are provided at both ends of the outer sleeve 1, so that the outer sleeve 1, the bearing 3 and the inner sleeve 4 form an integral structure; during normal running of a train, the inner sleeve 4 and the inner ring of the bearing 3 rotate together with the wheel 6, while the outer ring of the bearing 3 and the outer sleeve 1 remain relatively fixed. As shown in Fig. 5, opposite sides outside the outer sleeve 1 are each provided with a boss 11 axially extending along the outer sleeve 1, with the bosses 11 extending horizontally outward, and a plurality of flutes 12 are disposed at intervals along the length directions of the bosses 11; the locking pins 2 are inserted into the flutes 12 to lock, and can be switched among the plurality of flutes 12 under the action of an external force to change the gauge. Specifically, when the gauge of a train needs to be changed, the locking pins 2 are disengaged from the flutes 12 from bottom to top under the action of a vertical upward external force for unlocking; at this time, the wheels 6 are pushed to move outward or inward along the axle, and then the outer sleeve 1, the bearing 3 and the inner sleeve 4 as a whole are driven to move relative to the locking pins 2, and when the corresponding flutes 12 move to just below the locking pins 2, the locking pins 2 are inserted into the flutes 12 under gravity and downward acting force, then the gauge of the wheel 6 is changed. Specifically, the distance between two adjacent said flutes is equal to half of the gauge to be changed. When the gauge is changed, the wheels 6 at both ends of the axle move simultaneously, and the two wheels 6 each move half the distance of the gauge to be changed, then the total movement distance is the distance of the gauge to be changed; for instance, a gauge change can be from a standard gauge to a narrow gauge or a wide gauge, or from a narrow gauge or a wide gauge to a standard gauge, the gauge can be selected according to specific needs. The locking mechanism of the present invention is simple in structure, and can change train gauge conveniently and reliably, thereby providing the continuous running of trains on rails of different gauges.

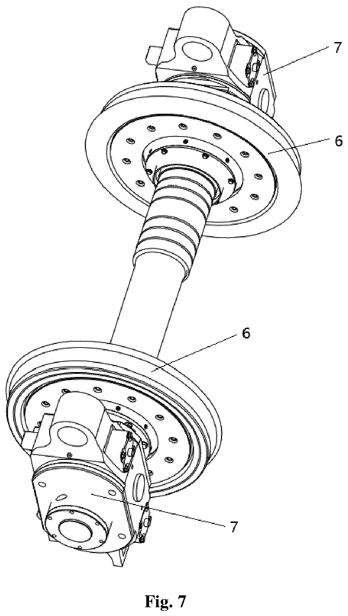

As shown in Fig. 7, during normal operation, the locking mechanism is installed in an axle-box body 7 outside the wheel 6, and the locking mechanism is in clearance fit with the axle-box body 7.

In an embodiment of the present invention, as shown in Fig. 6, the locking pin 2 includes a pin body 21 being cylindrical in shape, one side (the outer peripheral surface side) of the pin body 21 is provided with an open groove 22, the open groove 22 being located in the middle of the pin body 21 along the length direction, and the diameter of the pin body 21 at two ends is smaller than the diameter thereof at the middle part; an upper end of the pin body 21 is connected by a return spring 5, one end of the return spring 5 is sleeved on the upper end of the pin body 21 and abuts on a step surface between the upper end and the middle part, and the other end of the return spring 5 is fixedly connected to a support base above the flute 12; the return spring 5 is configured to ensure that the pin body 21 has a locking force after being locked to keep it in a locked state, and provides a reverse force for the pin body 21 when it is locked again after being unlocked, which facilitates quick locking; the open groove 22 penetrates along the radial direction of the pin body 21 to facilitate the pin body 21 to move back and forth (left and right) in the radial direction, and the open groove 22 is provided with at least one lug 23 extending axially along the pin body 21; in an embodiment of the present invention, two lugs 23 axially parallel along the pin body 21 are preferably disposed, and the distance between the two lugs 23 is the same as the distance between two adjacent flutes 12; disposing two lugs 23 helps to improve the forces on individual lugs 23 and enhances the reliability of locking and unlocking; an outer surfaces of the lugs 23 are flush with an outer surface of the pin body 21, an upper end of the lug 23 is connected with a groove top of the open groove 22, a notch 24 is provided between a lower end of the lug 23 and a groove bottom of the open groove 22, and the lugs 23 are inserted into the flutes 12 from their lower ends. In the process of gauge change, while the locking pins 2 are disengaged from the flutes 12 upwards under the action of a vertical upward external force, firstly, the lug 23 is disengaged from the flutes 12 upwardly and moves to a position above the flutes 12, and then the notch 24 under the lug 23 is opposite to the boss 11 between the two flutes 12. When an external force is applied to the left or right, the outer sleeve 1 moves along with the wheels 6, and the boss 11 is locked into the notch 24 and moves along the notch 24; the lower end of the lug 23 is supported on the boss surface of the boss 11 until it moves to the position of another flute 12, then the pin body 21 moves downwards under the action of its own gravity and the reverse force of the return spring 5, and the lug 23 is inserted into the flute 12, so that the locking is achieved and the gauge is changed completely.

In an embodiment of the present invention, the width of the lug 23 matches the width of the flute 12 so that the lug 23 can be inserted into or disengaged from the flute 12, and it ensures the stable position of the entire locking mechanism after the lug 23 is inserted into the flute 12, so as to avoid any shaking; the width of the notch 24 is greater than or equal to the thickness of the boss 11, so that the boss 11 is able to be locked into the notch 24 and slide in the notch 24.

In an embodiment of the present invention, a bottom surface of the pin body 21 is respectively provided as upward-sloping guide slants 25 on both sides of the central axis to provide upward force to the pin body 21; guide rails with the same inclination as the guide slant 25 can be provided on the ground. When the guide slants 25 of the locking pin 2 move upwardly along the guide rails, upward force is provided for the locking pin 2.

In order to ensure a compact overall structure and reliable connection, in an embodiment of the present invention, the bosses 11 and the outer sleeve 1 are integrally formed, and the lug 23 and the open groove 22 are integrally formed; in an embodiment of the present invention, an outer surface of the outer sleeve 1 has a polygonal, preferably a regular octagon cross section, and the bosses 11 on both sides thereof are preferably disposed at two vertical sides of the regular octagon to achieve structural optimization.

In an embodiment of the present invention, outer sides of the bosses 11, the flutes 12 and the locking pins 2 are provided with a wear-resistant coating to enhance wear resistance of the structure, and the wear-resistant coating is coated with a lubricant to reduce friction and improve lubrication effect.

In an embodiment of the present invention, in order to facilitate the connection of the locking mechanism with the wheel, one end of the inner sleeve extends beyond the outer sleeve to form a wheel connection end 41, the wheel connection end 41 is connected to the wheel 6 by a fastener, and is configured to fasten the locking mechanism to the wheel 6 by the inner sleeve 4.

As can be seen from the embodiments above, the locking mechanism of the present invention is simple in structure and convenient to operate, and can provide reliable locking and unlocking, so as to change train gauge conveniently and reliably, thereby providing continuous running of trains on rails of different gauges.

The descriptions above are only preferred embodiments of the present invention and are not intended to limit the present invention.

## Claims

1. A locking mechanism for a gauge-changing wheelset, comprising an outer sleeve (1) and locking pins (2); opposite sides outside the outer sleeve (1) are provided with bosses (11) axially extending along the outer sleeve (1), and a plurality of flutes (12) are disposed at intervals along the length directions of the bosses (11); when a gauge is changed, the locking pins (2) are inserted into the flutes (12), and switchable among the plurality of flutes (12) under the action of an external force to change a gauge.
**characterized in that**, the locking pin (2) comprises a pin body (21) one side of which is provided with an open groove (22) penetrating along the radial direction of the pin body (21), and the open groove (22) is provided with at least one lug (23) extending axially along the pin body (21), an upper end of the lug (23) is connected with a groove top of the open groove (22), a notch (24) is reserved between a lower end of the lug (23) and a groove bottom of the open groove (22), and the lug (23) is inserted into the flutes (12).

2. The locking mechanism for gauge-changing wheelset of claim 1, **characterized in that**, two parallel said lugs (23) extending axially along the pin body (21) are provided in the open groove (22).

3. The locking mechanism for gauge-changing wheelset of claim 1, **characterized in that**, the width of the lug (23) matches that of the flutes (12), and the width of the notch (24) is greater than or equal to the thickness of the boss (11).

4. The locking mechanism for gauge-changing wheelset of claim 1, **characterized in that**, a bottom surface of the pin body (21) is respectively provided as upward-slopping guide slants (25) on both sides of the central axis.

5. The locking mechanism for gauge-changing wheelset of claim 1, **characterized in that**, an upper end of the pin body (21) is connected by a return spring (5).

6. The locking mechanism for gauge-changing wheelset of claim 1, **characterized in that**, the bosses (11) and the outer sleeve (1) are integrally formed, and the lug (23) and the open groove (22) are integrally formed.

7. The locking mechanism for gauge-changing wheelset of any one of claims 1-6, **characterized in that**, outer sides of the bosses (11), the flutes (12) and the locking pins (2) are each provided with a wear-resistant coating, and the wear-resistant coating is coated with a lubricant.

8. The locking mechanism for gauge-changing wheelset of claim 7, further comprising an inner sleeve (4) and a bearing (3), and the inner sleeve (4), the bearing (3) and the outer sleeve (1) are tightly sleeved in sequence from inside to outside.

9. The locking mechanism for gauge-changing wheelset of claim 8, **characterized in that**, the bearing (3) comprises an inner ring and an outer ring, the inner ring of the bearing is press-fitted with an outer surface of the inner sleeve (4), the outer ring of the bearing (3) is in clearance fit with an inner surface of the outer sleeve (1), and check rings are provided at both ends of the outer sleeve (1).

10. The locking mechanism for gauge-changing wheelset of claim 8, **characterized in that**, one end of the inner sleeve (4) extends beyond the outer sleeve (1) to form a wheel connection end.

11. The locking mechanism for gauge-changing wheelset of claim 8, **characterized in that**, the bearing (3) is a rolling bearing.

## Patentansprüche

1. Verriegelungsmechanismus für einen Spurwechsel-Radsatz, aufweisend eine Außenhülse (1) und Verriegelungsstifte (2); gegenüberliegende Seiten außerhalb der Außenhülse (1) sind mit Naben (11) versehen, die sich axial entlang der Außenhülse (1) erstrecken, und eine Vielzahl von Nuten (12) sind in Abständen entlang der Längsrichtungen der Naben (11) angeordnet; wenn eine Spurweite geändert wird, werden die Verriegelungsstifte (2) in die Nuten (12) eingeführt und können unter der Einwirkung einer äußeren Kraft zwischen der Vielzahl der Nuten (12) umgeschaltet werden, um eine Spurweite zu ändern.
**dadurch gekennzeichnet, dass** der Verriegelungsstift (2) einen Stiftkörper (21) aufweist, dessen eine Seite mit einer offenen Nut (22) versehen ist, die in radialer Richtung entlang des Stiftkörpers (21) vordringt, und die offene Nut (22) ist mit mindestens einer Nase (23) versehen, die sich axial entlang des Stiftkörpers (21) erstreckt, ein oberes Ende der Nase (23) ist mit einer Nutoberseite der offenen Nut (22) verbunden, zwischen einem unteren Ende der Nase (23) und einem Nutboden der offenen Nut (22) ist eine Kerbe (24) vorbehalten, und die Nase (23) ist in die Nuten (12) eingeführt.

2. Verriegelungsmechanismus für Spurwechsel-Radsatz nach Anspruch 1, **dadurch gekennzeichnet, dass** zwei parallel verlaufende Nasen (23) in der offenen Nut (22) axial erstreckend entlang des Stiftkörpers (21) bereitgestellt sind.

3. Verriegelungsmechanismus für Spurwechsel-Radsatz nach Anspruch 1, **dadurch gekennzeichnet, dass** die Breite der Nase (23) mit jener der Nuten (12) übereinstimmt und die Breite der Kerbe (24) größer oder gleich der Dicke der Nabe (11) ist.

4. Verriegelungsmechanismus für Spurwechsel-Radsatz nach Anspruch 1, **dadurch gekennzeichnet, dass** jeweils eine untere Fläche des Stiftkörpers (21) als nach oben geneigte Führungsschrägen (25) auf beiden Seiten der Mittelachse bereitgestellt ist.

5. Verriegelungsmechanismus für Spurwechsel-Radsatz nach Anspruch 1, **dadurch gekennzeichnet, dass** ein oberes Ende des Stiftkörpers (21) durch eine Rückstellfeder (5) verbunden ist.

6. Verriegelungsmechanismus für Spurwechsel-Radsatz nach Anspruch 1, **dadurch gekennzeichnet, dass** die Naben (11) und die Außenhülse (1) einstückig ausgebildet sind und die Nase (23) und die offene Nut (22) einstückig ausgebildet sind.

7. Verriegelungsmechanismus für Spurwechsel-Radsatz nach einem der Ansprüche 1 bis 6, **dadurch gekennzeichnet, dass** die Außenseiten der Naben (11), die Nuten (12) und die Verriegelungsstifte (2) jeweils mit einer verschleißfesten Beschichtung versehen sind und die verschleißfeste Beschichtung mit einem Schmiermittel beschichtet ist.

8. Verriegelungsmechanismus für Spurwechsel-Radsatz nach Anspruch 7, ferner aufweisend eine Innenhülse (4) und ein Lager (3), und wobei die Innenhülse (4), das Lager (3) und die Außenhülse (1) nacheinander von innen nach außen dicht ummantelt sind.

9. Verriegelungsmechanismus für Spurwechsel-Radsatz nach Anspruch 8, **dadurch gekennzeichnet, dass** das Lager (3) einen Innenring und einen Außenring aufweist, wobei der Innenring des Lagers mit einer Außenfläche der Innenhülse (4) verpresst ist, der Außenring des Lagers (3) mit einer Innenfläche der Außenhülse (1) in Spielpassung ist, und an beiden Enden der Außenhülse (1) Kontrollringe bereitgestellt sind.

10. Verriegelungsmechanismus für Spurwechsel-Radsatz nach Anspruch 8, **dadurch gekennzeichnet, dass** sich ein Ende der Innenhülse (4) über die Außenhülse (1) hinaus erstreckt, um ein Radverbindungsende zu bilden.

11. Verriegelungsmechanismus für Spurwechsel-Radsatz nach Anspruch 8, **dadurch gekennzeichnet, dass** das Lager (3) ein Wälzlager ist.

## Revendications

1. Mécanisme de verrouillage pour essieu monté à écartement variable, comprenant un manchon extérieur (1) et des broches de verrouillage (2) ; les côtés opposés à l'extérieur du manchon extérieur (1) sont pourvus de bossages (11) s'étendant axialement le long du manchon extérieur (1), et une pluralité de cannelures (12) sont disposées à des intervalles le long des directions de longueur des bossages (11) ; lorsqu'un écartement est modifiée, les broches de verrouillage (2) sont insérées dans les cannelures (12), et peuvent être commutées parmi la pluralité de cannelures (12) sous l'action d'une force externe pour modifier un écartement,
**caractérisé en ce que** la broche de verrouillage (2) comprend un corps de broche (21) dont un côté est pourvu d'une rainure ouverte (22) pénétrant le long de la direction radiale du corps de broche (21), et la rainure ouverte (22) est pourvue d'au moins une patte (23) s'étendant axialement le long du corps de broche (21), une extrémité supérieure de la patte (23) est reliée à un sommet de rainure de la rainure ouverte (22), une encoche (24) est réservée entre une extrémité inférieure de la patte (23) et un fond de rainure de la rainure ouverte (22), et la patte (23) est insérée dans les cannelures (12).

2. Mécanisme de verrouillage pour essieu monté à écartement variable selon la revendication 1, **caractérisé en ce que** deux pattes parallèles (23) s'étendant axialement le long du corps de broche (21) sont prévues dans la rainure ouverte (22).

3. Mécanisme de verrouillage pour essieu monté à écartement variable selon la revendication 1, **caractérisé en ce que** la largeur de la patte (23) correspond à celle des cannelures (12), et la largeur de l'encoche (24) est supérieure ou égale à l'épaisseur du bossage (11).

4. Mécanisme de verrouillage pour essieu monté à écartement variable selon la revendication 1, **caractérisé en ce qu'**une surface inférieure du corps de broche (21) est respectivement prévue sous la forme d'inclinaisons de guidage en pente vers le haut (25) des deux côtés de l'axe central.

5. Mécanisme de verrouillage pour essieu monté à écartement variable selon la revendication 1, **caractérisé en ce qu'**une extrémité supérieure du corps de broche (21) est reliée par un ressort de rappel (5).

6. Mécanisme de verrouillage pour essieu monté à écartement variable selon la revendication 1, **caractérisé en ce que** les bossages (11) et le manchon extérieur (1) sont formés d'un seul tenant, et la patte (23) et la rainure ouverte (22) sont formées d'un seul tenant.

7. Mécanisme de verrouillage pour essieu monté à écartement variable selon l'une quelconque des revendications 1 à 6, **caractérisé en ce que** les côtés extérieurs des bossages (11), les cannelures (12) et les broches de verrouillage (2) sont chacun munis d'un revêtement résistant à l'usure, et le revêtement résistant à l'usure est revêtu d'un lubrifiant.

8. Mécanisme de verrouillage pour essieu monté à écartement variable selon la revendication 7, comprenant en outre un manchon intérieur (4) et un palier (3), et le manchon intérieur (4), le palier (3) et le manchon extérieur (1) sont manchonnés de manière serrée en séquence de l'intérieur vers l'extérieur.

9. Mécanisme de verrouillage pour essieu monté à écartement variable selon la revendication 8, **caractérisé en ce que** le palier (3) comprend une bague intérieure et une bague extérieure, la bague intérieure du palier est ajustée à force avec une surface extérieure du manchon intérieur (4), la bague extérieure du palier (3) est en ajustement avec jeu avec une surface intérieure du manchon extérieur (1), et des bagues de contrôle sont prévues aux deux extrémités du manchon extérieur (1).

10. Mécanisme de verrouillage pour essieu monté à écartement variable selon la revendication 8, **caractérisé en ce qu'**une extrémité du manchon intérieur (4) s'étend au-delà du manchon extérieur (1) pour former une extrémité de connexion de roue.

11. Mécanisme de verrouillage pour essieu monté à écartement variable selon la revendication 8, **caractérisé en ce que** le palier (3) est un palier à roulement.
